# EUROPEAN PATENT SPECIFICATION

(11) **EP 0 613 924 B1**
(45) Date of publication and mention of the grant of the patent: **17.05.2000**
(21) Application number: 94301165.0
(22) Date of filing: 18.02.1994
(51) Int. Cl.: C08K 5/25, C08L 7/00

(54) **Method of production of natural rubber treated with viscosity stabilizers**
Methode zur Herstellung eines mit viskositätsstabilisierenden Verbindungen behandelten Naturkautschukes
Procédé de fabrication de caoutchouc naturel traité avec des stabilisants de viscosité

(30) Priority: 02.03.1993 JP 4134493; 03.08.1993 JP 19251693; 03.08.1993 JP 19251793
(43) Date of publication of application: 07.09.1994
(73) Proprietor: BRIDGESTONE CORPORATION, Tokyo 104-0031 (JP)
(72) Inventor: Toratani, Hirotoshi, Kodaira-shi, Tokyo (JP); Nakamura, Eiji, Kodaira-shi, Tokyo (JP); Aoyama, Hideki, Niiza-shi, Saitama (JP); Hirata, Yasushi, Sayama-shi, Saitama (JP)
(74) Representative: Whalley, Kevin

(56) References cited:
- GB-A- 1 472 064
- J.SCHNETGER 'LEXICON DER KAUTSCHUK-TECHNIK' 1991 , HÜTHIG BUCH VERLAG, 2ND EDITION , HEIDELBERG,DE * page 635 - page 636 *

## Description

The present invention relates to a manufacturing method of natural rubber which imparts a good processability and excellent physical properties.

In general, natural rubber is produced in tropical countries such as the Kingdom of Thailand, Malaysia, and The republic of Indonesia. Natural rubber is used widely in the rubber industry, the tire industry and the like due to its excellent physical properties.

Immediately after natural rubber is produced, Mooney viscosity of the natural rubber is as low as 60 ∼ 70. However, during several months when natural rubber is transported to Japan for example, the Mooney viscosity thereof increases up to nearly 90 ∼ 100, that is gelation takes place ( so-called "storage hardening").

As a cause of storage hardening, it is believed that crosslinking is formed by the reaction of different kinds of bonds ( an aldehyde group and the like ) in an isoprene chain with protein and amino acids in natural rubber and then gelation takes place ( the mechanism has not been determined clearly yet in the literature).

The gelation in natural rubber ( an increase in the amount of gel ) deteriorates processability. In general, natural rubber having a high molecular weight is preferable from a consideration of physical properties, and a decrease in molecular weight affects the physical properties of natural rubber.

Molecular weight and amount of gel are greatly influenced by rubber coagulation from natural rubber latex, storage of natural rubber and drying conditions after water-washing.

As drying conditions in processes for producing natural rubber, there are two typical methods as follows. One is ribbed smoked sheet (RSS) graded by Type Description and Packing Specifications for Natural Rubber Grade Used in International Trade (so-called "Green Book"), and the other is technically specified rubber (TSR). According to RSS, smoking is carried out at around 60 °C for 5 ∼ 7 days, and in accordance with TSR, hot air-drying is carried out at around 120 °C for several hours.

However, there is a problem that the drying conditions at the time of manufacturing RSS promote the gelation of natural rubber. Also, there is a problem that the drying conditions at the time of manufacturing TSR lower the molecular weight of natural rubber. In addition, since in both RSS and TSR the viscosity thereof increases by gelation during storage ( storage hardening ), there is a problem that mastication causing a decrease in molecular weight is needed.

Most natural rubber is usually manufactured in the order of tapping - coagulation - washing (water-washing) - dehydration - drying - packing. In the process, foreign materials may be removed, but not completely. Although there is some natural rubber containing viscosity stabilizers for natural rubber (hereinafter referred to as "viscosity stabilizer"), it is the present situation that foreign materials therein are not removed completely.

Therefore, when natural rubber is used in the rubber industry, it is necessary to decrease Mooney viscosity by masticating in order to decrease the amount of gel and straining thereafter in order to remove foreign materials.

However, according to conventional techniques, there has not been obtained natural rubber having a high molecular weight and no foreign material. In other words, natural rubber has to be used as it is in order to maintain a high molecular weight thereof, and in this case there are some problems that natural rubber contains a lot of foreign materials and gel. On the other hand, in order to remove foreign materials in natural rubber or decrease the amount of gel, some processes such as masticating and straining are needed, but these processes disadvantageously lead to a decrease in the molecular weight of the natural rubber due to the mastication and the like.

Accordingly, there are contradictory requirements to obtain natural rubber having a high molecular weight and no foreign material using conventional techniques, and it is not possible to meet both demands.

In order to prevent the above-mentioned storage hardening, Rubber Research Institute of Malaysia (RRIM) has developed a technique wherein natural rubber latex is treated with about 0.08 wt% to 0.30 wt% of hydroxylamine sulfate (NH₂OH·H₂SO₄) to prepare natural rubber having a constant viscosity. There has been also developed a type (SMR-GP) wherein a solution of the same hydroxylamine sulfate is incorporated in dried natural rubber.

However, natural rubber having a constant viscosity due to hydroxylamine sulfate has the following disadvantages.
(1) It is hard to use hydroxylamine sulfate in Japan, since it is specified as a deleterious substance.
(2) An increase in viscosity is found in the early stage of storage.
(3) An effect of a constant viscosity deteriorates in severe circumstances ( e.g. around 60 °C in an oven ).
(4) Compatibility with rubber and the dispersibility therein are poor.
(5) The decomposition temperature is low, and the effect of a constant viscosity does not become sufficient on mixing at a high temperature.

In the literature (B.C.Sekhar, J. Polymer Science, vol.XL VIII, 133(1960)) which shows the results of screening of additives for natural rubber having an effect of a constant viscosity, semicarbazide (NH₂NHCONH₂) is referred to. As additives having a likely effect of a constant viscosity, hydroxylamine sulfate, semicarbazide and dimedone(1,1-dimethylcyclohexane-3,5-dione) are described in the literature.

However, when the amount of each additive is less than some lower limit, it is confirmed that from the beginning an effect of a constant viscosity is low or viscosity increases from a certain time. The causes are considered as follows:
a) additives do not disperse sufficiently due to the small amount thereof
b) a certain amount of additive is required to block aldehyde groups and the like which are considered to cause gelation.

An object of the present invention is to solve the problem concerning drying conditions in the above-mentioned conventional manufacturing processes of natural rubber, that is to solve the problem concerning the drying conditions at the time of manufacturing RSS or TSR.

Another object of the present invention is to attempt the suppression of gelation and the prevention of a decrease in molecular weight.

Still another object is to provide a manufacturing method of natural rubber having both a good processability and excellent physical properties.

Yet another object of the present invention is to solve the above-mentioned problem that natural rubber having a high molecular weight and no foreign material cannot be obtained.

The present invention provides a manufacturing method of natural rubber which comprises the following consecutive steps:
1) tapping
2) coagulation
3) water washing
4) dehydration
5) drying
6) mixing a viscosity stabilizer with the dried natural rubber with a mixer and an extruder
7) packing.

Preferably the natural rubber is treated with a strainer after mixing with the viscosity stabilizer.

Drying temperature preferably ranges from 80 to 100°C.

In a preferred embodiment of the method of the invention, the viscosity stabilizer comprises one or more hydrazide compounds of the following general formula,

R-CONHNH₂

where R is selected from alkyl groups having 1 to 30 carbon atoms, cycloalkyl groups having 3 to 30 carbon atoms and aryl groups.

The content of the hydrazide compound(s) is preferably 0.001 part by weight or more based on 100 parts by weight of the natural rubber.

In the method of the invention, the drying is preferably conducted under conditions to result in 10% or less of the difference of gel content and 85% or more of molecular weight retention between before and after drying.

According to the present invention, natural rubber containing viscosity stabilizers can be prepared by mixing viscosity stabilizers into dried natural rubber. It is necessary to add viscosity stabilizers to dried natural rubber as quickly as possible since gelation ( storage hardening ) proceeds even when the dried natural rubber is left at room temperature.

As viscosity stabilizers used when natural rubber is prepared, there may be used, for example, hydroxylamine sulfate, semicarbazide, dimedone(1,1-dimethylcyclohexane-3,5-dione) and hydrazide compounds (additives for natural rubber used in the present invention) of the following general formula (I),

R-CONHNH₂ (I)

where R is selected from the group consisting of alkyl groups having 1 to 30 carbon atoms, cycloalkyl groups having 3 to 30 carbon atoms and aryl groups.

When these viscosity stabilizers are compounded into natural rubber, these viscosity stabilizers react with bonds of a different kind in an isoprene chain (such as an aldehyde group) resulting in blocking said bonds. Consequently, this reaction results in the prevention of the gelation reaction in natural rubber which causes the storage hardening and the suppression of an increase in the amount of gel.

Exemplary suitable hydrazide compounds having an alkyl group of 1 ∼ 30 carbon atoms of the above-mentioned general formula (I) include: acethydrazide, hydrazide propionate, butylhydrazide, hydrazide laurate, hydrazide palmitate, hydrazide stearate and the like.

Exemplary suitable hydrazide compounds having a cycloalkyl group of 3 ∼ 30 carbon atoms of the above-mentioned general formula (I) include: cyclopropyl hydrazide, cyclohexyl hydrazide, cycloheptyl hydrazide and the like.

A hydrazide compound having an aryl group of the above-mentioned general formula (I) may contain substituents, and examples of said compound include phenyl hydrazide (C₆H₅-CONHNH₂), o-, m-, p-tolyl hydrazide, p-methoxyphenyl hydrazide, 3,5-xylyl hydrazide, 1-naphthyl hydrazide and the like.

As a hydrazide compound of the above-mentioned formula (I), a fatty acid hydrazide having an alkyl chain is preferable.

Although the above-mentioned hydroxylamine sulfate, semicarbazide and dimedone have been known as viscosity stabilizers, it has not previously been known to compound these viscosity stabilizers into natural rubber. For the first time, the present inventors have succeeded in developing the above-mentioned techniques. There can be attained for the first time prevention of a decrease in molecular weight and suppression of an increase in the amount of gel by employing viscosity stabilizers.

Hydrazide compounds of the above-mentioned general formula (I) are known materials, and manufacturing methods thereof are also known. However, it has not been known that the above-mentioned viscosity stabilizers of the present invention are compounded into natural rubber.

Hydrazide compounds of the above-mentioned general formula (I) are safe to handle. These compounds impart the effect of a constant viscosity when added to natural rubber, and the effect of a constant viscosity lasts for a long time.

As embodiments using hydrazide compounds of the above-mentioned general formula (I) as an additive for natural rubber, these compounds may be added to natural rubber produced to prevent storage hardening, or these compounds may be added in the stage of mastication and the like.

The amount of the compound used as a viscosity stabilizer and selected from hydroxylamine sulfate, semicarbazide, dimedone or hydrazide compounds of the above-mentioned general formula (I) is preferably 0.001 part by weight or more based on 100 parts by weight of the natural rubber.

When the amount of each viscosity stabilizer used is less than 0.001 part by weight based on 100 parts by weight of the natural rubber, the viscosity of natural rubber is not stabilized sufficiently. Although the amount of viscosity stabilizers depends on a variety of natural rubbers used ( produced ) and a variety of viscosity stabilizers used, the amount preferably ranges from 0.01 to 3.0 parts by weight based on 100 parts by weight of natural rubber.

For instance, regarding hydroxylamine sulfate, semicarbazide and dimedone, the amount thereof preferably ranges from 0.01 to 2.0 parts by weight based on 100 parts by weight of natural rubber.

As far as compounds of the above-mentioned general formula (I) is concerned, when R has a carbon number from 1 to 5, the content of each hydrazide compound preferably ranges from 0.01 to 1.0 part by weight, more preferably 0.03 to 0.5 part by weight based on 100 parts by weight of natural rubber. In the case of acethydrazide having a carbon number of 1, the lower limit is preferably 0.04 part by weight or more. When R has a carbon number from 15 to 20, the content of each hydrazide compound preferably ranges from 0.1 to 3.0 parts by weight based on 100 parts by weight of natural rubber, more preferably from 0.1 to 0.5 parts by weight. In the case of hydrazide palmitate having a carbon number of 16, the lower limit is preferably 0.15 part by weight or more, and in the case of hydrazide stearate having a carbon number of 18, the lower limit is preferably 0.16 part by weight or more.

The hydrazide compounds of the above-mentioned general formula (I) may be contained individually or jointly in natural rubber in the range of above-mentioned content. Exemplary suitable hydrazide compounds of the above-mentioned general formula (I) above include acethydrazide, hydrazide propionate, butylhydrazide, hydrazide laurate, hydrazide palmitate, hydrazide stearate, cyclopropyl hydrazide, cyclohexyl hydrazide, phenyl hydrazide and the like.

In addition to the above-mentioned viscosity stabilizers, if necessary there may be compounded an optional component, such as softener, antioxidant and the like into natural rubber. Also, in addition to the above-mentioned viscosity stabilizers, if necessary there may be compounded into a rubber composition which comprises natural rubber manufactured by the method of the present invention an optional component such as filler, reinforcer, softener, vulcanizer, vulcanization accelerator, vulcanization accelerator auxiliary, antioxidant and the like.

Natural rubber containing the above-mentioned viscosity stabilizers may be also treated under drying conditions to result in 10 % or less of the difference of gel content and 85 % or more of molecular weight retention, preferably 5 % or less of the difference of gel content and 90 % or more of molecular weight retention, between before and after drying.

Although drying conditions which keep the difference of gel content 10 % or less and the molecular weight retention 85 % or more vary depending upon the kind and the grade of natural rubber used (produced), it is preferable that drying temperature is set at 80 ∼ 100 °C and drying time is as short as possible in order to prevent gelation and a decrease in molecular weight.

Since the scission of a molecular chain takes place remarkably above 100 °C, it is preferable that drying temperature is set at 80 ∼ 100 °C. On the contrary, gel formation rate becomes fast at less than 80 °C. Therefore, it is expected that this drying condition suppresses gelation and prevents a decrease in molecular weight of natural rubber.

In manufacturing methods of the natural rubber treated in the order of tapping - coagulation - washing( water washing ) - dehydration - drying - packing, natural rubber having a high molecular weight and no foreign material may be obtained by mixing viscosity stabilizers and the natural rubber with a mixer, an extruder and the like after conventional drying or treating under the above-mentioned drying conditions and by treating with a strainer thereafter.

Natural rubber having a high molecular weight and no foreign material obtained by the manufacturing method according to the present invention contains viscosity stabilizers and is treated with a strainer.

The object of strainer treatment is to remove foreign materials in natural rubber containing viscosity stabilizers. As an example of the strainer treatment, foreign materials can be removed by passing natural rubber containing viscosity stabilizers through a mesh-like material formed at the point of an extruder. A size of the mesh corresponding to 0.355mm (No.45) defined by ASTM E11 is preferable. However, the size of the mesh may be changed suitably for natural rubber produced and the size of foreign materials contained in the natural rubber and the like.

In order to disperse viscosity stabilizers sufficiently, mixing is necessary. Besides, in order to pass rubber through a strainer, heating ( 100 °C or less ) is necessary. Therefore, it is efficient to carry out simultaneously the mixing of viscosity stabilizers and a strainer treatment. Also, in order to suppress gelation caused by heating rubber, it is necessary to add viscosity stabilizers before the strainer treatment. Consequently, it is desired that a strainer treatment is carried out immediately after mixing viscosity stabilizers for natural rubber.

There may be provided a method for suppressing an increase in the viscosity of natural rubber which comprises adding to the natural rubber hydrazide compounds of the above-mentioned general formula (I). The amount of the hydrazide compounds added is preferably 0.001 part by weight or more based on 100 parts by weight of natural rubber.

When the amount of hydrazide compounds added is less than 0.001 part by weight, an increase in the viscosity of natural rubber may not be suppressed sufficiently. The amount of hydrazide compounds added depends on natural rubber and hydrazide compounds. Preferably, the addition amount thereof ranges from 0.01 to 3.0 parts by weight based on 100 parts by weight of natural rubber.

The range of the addition amount of each hydrazide compound used for the method for suppressing an increase in the viscosity of natural rubber is the same as that of the content of hydrazide compounds used for natural rubber as a viscosity stabilizer.

The effects of the present invention are as follows.
(1) Natural rubber containing viscosity stabilizers and treated under the drying conditions of the present invention and the manufacturing methods thereof result in good processability and excellent physical properties of the natural rubber since a decrease in molecular weight and an increase in an amount of gel do not happen even after drying.
(2) Natural rubber mixed with viscosity stabilizers and treated with a strainer impart good processability and excellent physical properties to the natural rubber since a decrease in molecular weight and an increase in the amount of gel do not happen and natural rubber is substantially free from foreign materials.
   Natural rubber obtained by the present invention can be suitably used for a raw material needing high precision such as dimensional stability and the like, for instance tires for airplanes, and bead inflation rubber. When hydrazide compounds are used for natural rubber as a viscosity stabilizer, the natural rubber and the manufacturing methods thereof lead to good processability and excellent physical properties
(3) Additives for natural rubber used according to the present invention obstruct a reaction of gelation in the natural rubber and suppress an increase in the viscosity of the natural rubber for a long time. Accordingly, when the additives are added to natural rubber produced, it is possible to prevent storage hardening, and as soon as the additives are added to the natural rubber in the stage of mastication, the effect of constant viscosity appears.
(4) Since there is suppressed an increase in the viscosity of a rubber composition which comprises natural rubber manufactured by the method according to the present invention for a long time, the viscosity remains so low that a mastication process is not needed. Consequently, the shortage of Banbury mixers can be solved, and it is expected that it is possible to improve the productivity remarkably, and it is possible to reduce the cost drastically.
(5) By methods for suppressing an increase in the viscosity of natural rubber, the increase in the viscosity of the natural rubber can be suppressed for a long time.

The present invention will be further described by means of the following examples and comparative examples, but the present invention is not limited by these examples.

### Example 1, Comparative Examples 1 ∼ 2

Natural rubber was prepared by using an unsmoked sheet as raw rubber based on the drying conditions shown in the following Table 1.

With respect to each natural rubber, an amount of gel and molecular weight were determined before drying and after leaving dried natural rubber at 60 °C for 20 days, respectively. There were also determined carbon black dispersibility and tensile strength of natural rubber which was left at 60 °C for 20 days and then was vulcanized.

The results are shown in the following Table 1.

The amount of gel, molecular weight, carbon black dispersibility and tensile strength of rubber vulcanized were determined by the following methods.

### (1) Amount of gel

0.2 g of rubber is dissolved in toluene (first grade) (60cc), and gel is separated by centrifuging. After drying gel, the amount of the gel was determined.

### (2) Molecular weight

Molecular weight was determined by a gel permeation chromatography method. Gel Permeation Chromatograph HCL-8020 manufactured by Toso K.K. was used for measurement. For a column, GMHXL manufactured by Toso K.K. was used. For calibration, a standard polystyrene manufactured by Toso K.K. was used. THF (first grade) was used as a solvent, and 0.01g sample/30cc THF was used as a solution.

### (3) Carbon black dispersibility

Dispersibility was determined using a microscope based on ASTM D2663B. The larger the value, the better the dispersibility.

### (4) Tensile properties of rubber vulcanized

With regard to the preparation of rubber vulcanized, compounding was carried out based on ASTM D3184 and Standard Formula 2A was used.

Tensile testing was carried out based on ASTM D1278.

Table 1 shows the following findings.

Example 1 shows natural rubber treated under the drying conditions of the present invention and containing a viscosity stabilizer. Because of the viscosity stabilizer and the drying conditions of the present invention, an increase in the amount of gel was substantially low and the molecular weight was held substantially constant for 20 days after drying. Also, carbon black dispersibility and tensile strength of the natural rubber vulcanized were good even after leaving the natural rubber at 60 °C for 20 days.

Comparative Examples 1 and 2 are beyond the scope of the present invention and Comparative Example 1 is based on drying conditions of a conventional RSS, and Comparative Example 2 is based on drying conditions of a conventional TSR.

In comparative Example 1, after leaving the natural rubber at 60 C for 20 days, the amount of gel increased remarkably though the molecular weight thereof was maintained substantially constant. Carbon black dispersibility and tensile strength of the natural rubber vulcanized became poor.

In comparative Example 2, after leaving the natural rubber at 60 °C for 20 days, the amount of gel increased remarkably and the molecular weight thereof decreased drastically. Carbon black dispersibility and tensile strength of the natural rubber vulcanized became poor.

### Examples 2 ∼ 3, Comparative Examples 3 ∼ 5

Natural rubber was prepared by using an unsmoked sheet as raw rubber based on the treatments shown in the following Table 2. The natural rubber was left at 60 °C for 20 days.

Thereafter, the amount of gel, molecular weight, an amount of foreign materials were determined and carbon black dispersibility and tensile strength of rubber vulcanized were determined as well.

The results obtained are shown in the following Table 2.

The amount of gel, molecular weight, carbon black dispersibility and tensile strength of rubber vulcanized were determined based on the above-mentioned methods (1) - (4). The amount of foreign materials was determined based on the following method (5).

### (5) Amount of foreign materials

As a metal mesh for a strainer to remove foreign materials, there was used a mesh corresponding to 0.355 mm (No.45) defined by ASTM E11.

Table 2 shows the following findings.

Examples 2 and 3 are within the scope of the present invention, and a viscosity stabilizer was contained in natural rubber, and a strainer treatment was carried out. According to Examples 2 and 3, even after leaving natural rubber for 20 days, an increase in the amount of gel and a decrease in molecular weight were suppressed, and the natural rubber is substantially free from foreign materials. Also, carbon black dispersibility and tensile strength of the rubber vulcanized were good.

Comparative Examples 3 ∼ 5 are beyond the scope of the present invention. In Comparative Example 3, a viscosity stabilizer was not contained and a strainer treatment was not carried out. According to Comparative Example 3, an increase in the amount of gel became remarkable, and the natural rubber contains large amount of foreign materials. Also, carbon black dispersibility and tensile strength of the rubber vulcanized became poor.

In Comparative Example 4, a viscosity stabilizer was not contained, and a strainer treatment was carried out. Although the natural rubber is substantially free from foreign materials, an increase in the amount of gel became remarkable and carbon black dispersibility and tensile strength of rubber vulcanized became poor as well.

In Comparative Example 5, a viscosity stabilizer was not contained, and a strainer treatment was carried out, and furthermore a mastication treatment was carried out. Although an increase in the amount of gel was suppressed, a decrease in molecular weight was remarkable, and tensile strength of the rubber vulcanized became poor.

### Examples 4 ∼ 11, Comparative Examples 6 ∼ 8

In the following Table 3 there are shown additives for natural rubber, the content thereof and the change of Mooney viscosity with time.

The preparation of a rubber composition (masticated rubber) containing additives for natural rubber used in Examples 4 ∼ 11, Comparative Examples 6 ∼ 8 and a measurement method of Mooney viscosity are as follows.

### Examples 4 and 5

In the process of mastication, 100 parts by weight of natural rubber (RSS#4) and 0.08 part by weight of peptizer, and 0.16 or 0.32 part by weight of hydrazide stearate were mixed, and then a masticated rubber was obtained.

### Examples 6 and 7

By the same way as in Examples 4 and 5, 0.15 or 0.30 part by weight of hydrazide palmitate was mixed, and then a masticated rubber was obtained.

### Example 8

By the same way as in Examples 4 and 5, 0.04 part by weight of acethydrazide was mixed, and then a masticated rubber was obtained.

### Examples 9 and 10

By the same way as in Examples 4 and 5, 0.07 or 0.20 part by weight of hydrazide stearate was mixed, and then a masticated rubber was obtained.

### Example 11

By the same way as in Examples 4 and 5, 0.10 part by weight of phenylhydrazide was mixed, and then a masticated rubber was obtained.

### Comparative Examples 6 and 7

Only 100 parts by weight of natural rubber (RSS#4) and 0.08 part by weight of peptizer were mixed, and then a masticated rubber was obtained (Comparative Example 6). 100 parts by weight of natural rubber (RSS#4), 0.08 part by weight of peptizer and 0.07 part by weight of hydroxylamine sulfate were mixed, and then a masticated rubber was obtained ( Comparative Example 7 ).

### Comparative Example 8

By the same way as in Examples 4 and 5, 0.04 part by weight of semicarbazide, (NH₂-CONHNH₂), was mixed, and then a masticated rubber was obtained.

### A measurement method of Mooney viscosity

In order to confirm whether a constant viscosity is attained, after the masticated rubber of Examples 4 ∼ 11 and Comparative examples 6 ∼ 8 was left in an oven at 60 °C to cause hardening acceleration, the change of Mooney viscosity with time was determined.

As is clear from Table 3, compared to Comparative Examples 6 ∼ 8, Mooney viscosity of Examples 4 ∼ 11 hardly changes with time, and an effect of a constant viscosity lasts for a long time. Especially, concerning an effect of a constant viscosity, the Examples 4 ∼ 11 of the present invention are superior to Comparative Examples 7 and 8 using conventional additives for natural rubber.

**Table 1**

| | | Example | Comparative Example | |
|---|---|---|---|---|
| | | 1 | 1 | 2 |
| Drying conditions | Drying time | 2 hours | 5 days | 2 hours |
| | Drying temperature | 100°C | 60°C | 120°C |
| Viscosity stabilizer for natural rubber*1 | | present | absent | absent |
| Amount of gel | Before drying | 3% | 3% | 3% |
| | 20 days after drying | 9% | 27% | 31% |
| | Difference of gel content | + 6% | + 24% | + 28% |
| Molecular weight | Before drying | 2.2×10⁶ | 2.2×10⁶ | 2.2×10⁶ |
| | 20 days after drying | 1.9×10⁶ | 2.0×10⁶ | 1.5×10⁶ |
| | Retention | 86% | 91% | 68% |
| After 20 days | Carbon black dispersibility | 89% | 68% | 64% |
| | Tensile strength(kg/cm²) | 301 | 284 | 276 |

| | | | | |
|---|---|---|---|---|
| *1: 0.2 phr of hydrazide stearate is contained. | | | | |

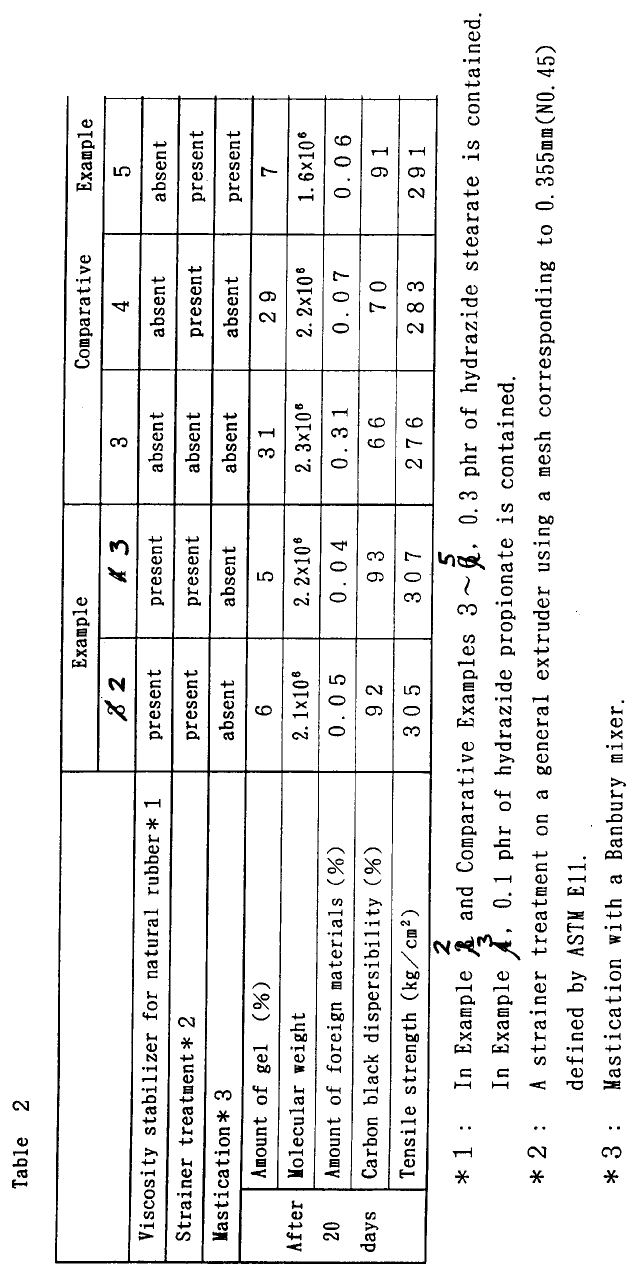

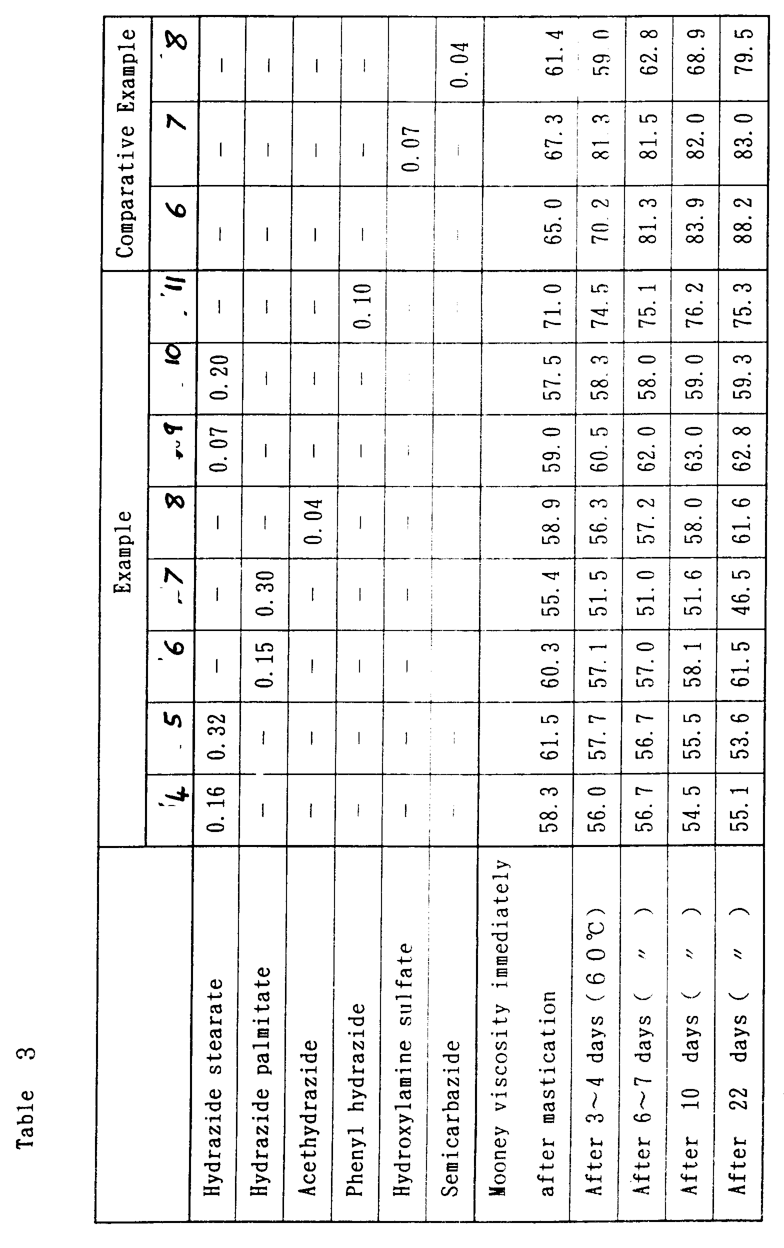

## Claims

1. A manufacturing method of natural rubber which comprises the following consecutive steps:
1) tapping
2) coagulation
3) water washing
4) dehydration
5) drying
6) mixing a viscosity stabilizer with the dried natural rubber with a mixer and an extruder
7) packing.

2. A method as claimed in claim 1, wherein the natural rubber is treated with a strainer after mixing with the viscosity stabilizer.

3. A method as claimed in claim 1 or 2, wherein drying temperature ranges from 80 to 100°C.

4. A method as claimed in claim 1, 2 or 3, wherein the viscosity stabilizer comprises one or more hydrazide compounds of the following general formula,
R-CONHNH₂
where R is selected from alkyl groups having 1 to 30 carbon atoms, cycloalkyl groups having 3 to 30 carbon atoms and aryl groups.

5. A method as claimed in claim 4, wherein the content of the hydrazide compound(s) is 0.001 part by weight or more based on 100 parts by weight of the natural rubber.

## Patentansprüche

1. Verfahren zum Herstellen von Naturkautschuk, umfassend die aufeinanderfolgenden Schritte:
(1) Zapfen
(2) Koagulation
(3) Waschen mit Wasser
(4) Entwässern
(5) Trocknen
(6) Mischen eines Viskositätsstabilisators mit dem getrockneten Naturkautschuk mit Hilfe eines Mischers und eines Extruders
(7) Verpacken.

2. Verfahren nach Anspruch 1, wobei der Naturkautschuk nach dem Mischen mit dem Viskositätsstabilisator mit einem Strainer behandelt wird.

3. Verfahren nach Anspruch 1 oder 2, wobei die Trocknungstemperatur im Bereich von 80° bis 100°C liegt.

4. Verfahren nach Anspruch 1, 2 oder 3, wobei der Viskositätsstabilisator eine oder mehrere Hydrazid-Verbindungen der folgenden allgemeinen Formel umfasst:
R-CONHNH₂
worin R ausgewählt wird aus: Alkyl-Gruppen mit 1 bis 30 Kohlenstoffatomen, Cycloalkyl-Gruppen mit 3 bis 30 Kohlenstoffatomen und Aryl-Gruppen.

5. Verfahren nach Anspruch 4, wobei der Gehalt an Hydrazid-Verbindung(en) bezogen auf 100 Gewichtsteile des Naturkautschuks 0,001 Gewichtsteile oder mehr beträgt.

## Revendications

1. Procédé de préparation d'un caoutchouc naturel qui comprend les étapes consécutives suivantes :
1) de prélèvement
2) de coagulation
3) de lavage à l'eau
4) de déshydratation
5) de séchage
6) de mélange d'un stabilisant de viscosité avec le caoutchouc naturel séché à l'aide d'un mélangeur et d'une extrudeuse
7) d'emballage.

2. Procédé suivant la revendication 1, dans lequel le caoutchouc naturel est traité avec un tamis après le mélange avec le stabilisant de viscosité.

3. Procédé suivant la revendication 1 ou 2, dans lequel la température de séchage varie de 80 à 100°C.

4. Procédé suivant la revendication 1, 2 ou 3, dans lequel le stabilisant de viscosité comprend un ou plusieurs composés d'hydrazide de la formule générale suivante,
R-CONHNH₂
dans laquelle R est choisi à partir de groupes alkyles contenant de 1 à 30 atomes de carbone, de groupes cycloalkyles contenant de 3 à 30 atomes de carbone et de groupes aryles.

5. Procédé suivant la revendication 4, dans lequel la teneur en composé(s) d'hydrazide est supérieure ou égale à 0,001 parties en poids sur la base de 100 parties en poids du caoutchouc naturel.
